# EUROPEAN PATENT APPLICATION

(11) **EP 1 473 213 A2**
(43) Date of publication of application: **03.11.2004**
(21) Application number: 04252498.3
(22) Date of filing: 29.04.2004
(51) Int. Cl.: B62D 27/02

(54) **Vehicle body construction**

(30) Priority: 29.04.2003 GB 0309685
(71) Applicant: Gibbs Technologies Ltd., Warwickshire CV11 4LY (GB)
(72) Inventor: Locke, Adrian John, Waterlooville Hamsphire PO7 6DR (GB)
(74) Representative: Feakins, Graham Allan

(57) **Abstract**

At least three beams, 2, 4, 6, are connected in at least two planes by means of a cruciform member 8. Rivets 30 are used to locate the joint while a bonding agent, which may be a structural adhesive or cold solder, sets. Cruciform arms 10 may be at ninety degree intervals; at least one arm may be deformed into, or extruded at, an alternative angle. The beams may be of aluminium; other metal; plastic, or composite material. More than one cruciform may be used in one joint (Figures 2, 3); arms 10 may be abbreviated to reduce the joint's bulk and mass. Plates 12, 14 may be used in opposition to a cruciform to strengthen and balance joints. The bonded joint may be used in the frame of a vehicle, particularly an amphibious vehicle. The cruciform member provides broad planar surfaces for a strong bonded joint, which is unlikely to peel.

## Description

The present invention relates to vehicle body construction and in particular to a beam connection in a vehicle and a method of connecting vehicle beams.

The term "beam" in the present specification is intended to include structural frame members forming part of a vehicle body. Generally the term is intended to include structural frame members forming part of a vehicle body. Generally the term is intended to cover elongate members.

The connection of beams in vehicles is conventionally by means of welding. US Patent No 5,372,400 assigned to Audi A6 shows a welded joint in a vehicle body between frame members. Welding, particularly aluminium members together, is attractive but is an energy intensive process and the heat generated may affect zones around the weld area. Aluminium in particular should if possible be welded in an inert gas atmosphere to avoid the formation of oxides around the weld. Aluminium can also lose up to 50% of its strength during welding operations. In aircraft parts like wing spar units which were previously fabricated by welding or even riveting are now being milled from solid billets to overcome such problems. Another problem with welding is that it is a technique not so well suited to low volume manufacture. As for riveting, this technique does not perform well in highly stressed joints and may cause problems in assembly when using hollow beams.

A beam connection in a vehicle according to the invention comprises at least one cruciform member at least partly bonded between at least three beams of the connection, the beams being interconnected in at least two different planes. Bonding is preferably by means of an adhesive.

The provision of the cruciform member provides a preformed member already in a unitary conformation with suitable broad planar surfaces for applying a bonding agent; that is, the desired connection is already preset by the provision of a unitary member.

In a further preferred embodiment, a pair of cruciform members is fixed either side of one of the beams to secure beams extending outwardly from the one beam.

It is important when designing adhesively bonded joints to ensure that loads are transmitted in shear, where adhesives have great strength; and not in peel, where adhesives are weak. Hence, substantial bonded areas should be provided between adjacent bonded parts. This aspect may be enhanced in the beam connection according to the invention by providing one or more substantially planar plate(s) bonded to at least two sides of beams opposite arms of the cruciform member(s).

Such plate(s) also address the weakness of bonded joints in peel. Because opposite sides of beams are both constrained, a torsional deformation which would result in rotation of an unsupported beam - or a beam supported on one side only - will tend to deform a previously square or rectangular beam into a parallelogram shape; hence loading the bonded faces in shear, and not peel, using the adhesive to its best capacity and skirting around its potential weakness.

In general, there is a disproportionate increase in the strength of bonded joints between beams as more beam faces are bonded together. A joint on one face of a beam only should be avoided if possible; joints on all flat faces are most desirable.

The ease of bonding several faces of each joined beam according to the connection and method of the invention demonstrates its advantage over various types of welded, riveted, or bolted joint, which may affect joints on only one or two face(s) of each beam. Such joints distribute loads unevenly, and may introduce local areas of weakness. For example, a first square section beam butt welded at right angle to a second square section beam is simple to manufacture; but may tear a wall out of the second beam when the joint fails in fatigue.

Where the beams are formed from aluminium, the connection between beams is achieved without the tendency for corrosion to occur at the point of connection. This is particularly important when the vehicle is an amphibian and subject to corrosion from seawater.

Rivets such as pop (RTM) rivets may be used between the cruciform member and beams to maintain a fixed relationship between parts of the connection whilst the bonding sets.

A method of connecting beams of a vehicle according to a second aspect of the invention comprises providing at least one cruciform member and offering to the member at least three beams with a bonding between the member and each of the three beams so as to form a connection between the beams, the beams being interconnected in at least two different planes.

Preferably rivets are then provided between the cruciform member and beams to hold the beams to the cruciform member whilst the bonding sets. Pop (RTM) rivets may be used.

The cruciform member may be provided from an extruded elongate length of material formed with a cruciform cross section. Suitable lengths of the cruciform members are then cut from the elongate lengths so that further connections according to the invention may be easily made.

Embodiments of the invention will now be described by way of example with reference to the accompanying drawings in which:-
Figure 1 is a perspective view of three beams interconnected by means of a cruciform member according to a first embodiment of the invention;
Figure 2 is a front perspective view of four beams interconnected by means of a cruciform member according to a second embodiment of the invention; and
Figure 3 is a partial side perspective view of the second embodiment as shown in Figure 2.

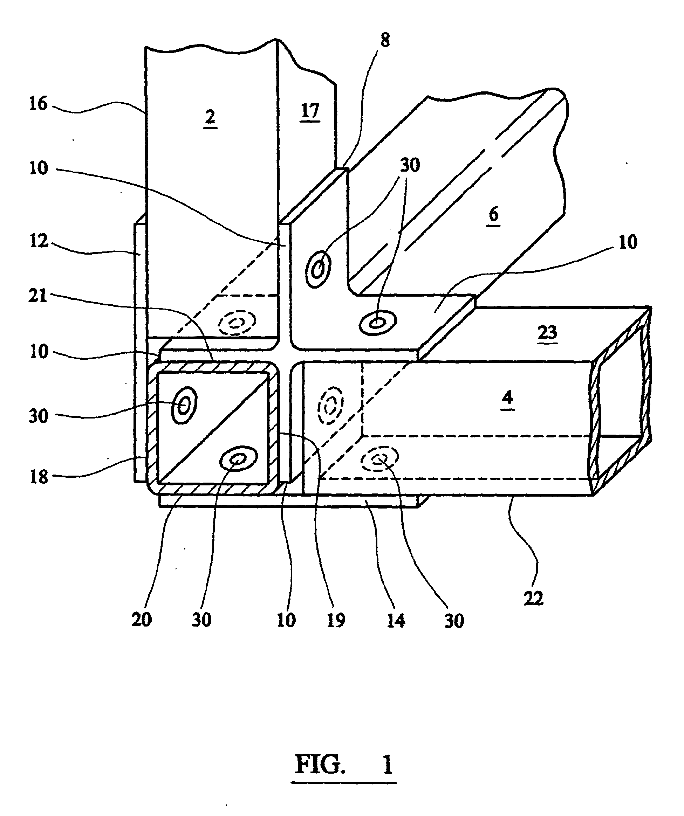

In Figure 1, a vertically extending square hollow beam 2 is connected to a horizontally extending square hollow beam 4 and a further horizontally extending square hollow beam 6, the connection between beams being primarily a cruciform member 8 having opposed arms 10. Further connecting members are simple flat plates 12 and 14. The flat plates 12, 14, are disposed on sides 16, 18, 20 and 22 opposite sides 17, 19, 21 and 23 against which the arms 10 of the cruciform member abut.

In order to ensure the connection between the cruciform member and beams, a suitable adhesive such as Dow (RTM) Betamate (RTM) XC 4600 heat cured for 20 minutes at 180°C or Dow (RTM) Betamate (RTM) XC 4601 heat cured for 15 minutes at 150°C or Plexus (RTM) M 425 or M 428 may be used. The Plexus adhesives do not need to be heat cured but are not so strong as the Betamate adhesives. Finally, pop (RTM) rivets 30 are used to fix the arms 10 of the cruciform member and plates to the beams to ensure correct location and prevent any relative movement of the beams whilst the adhesive sets.

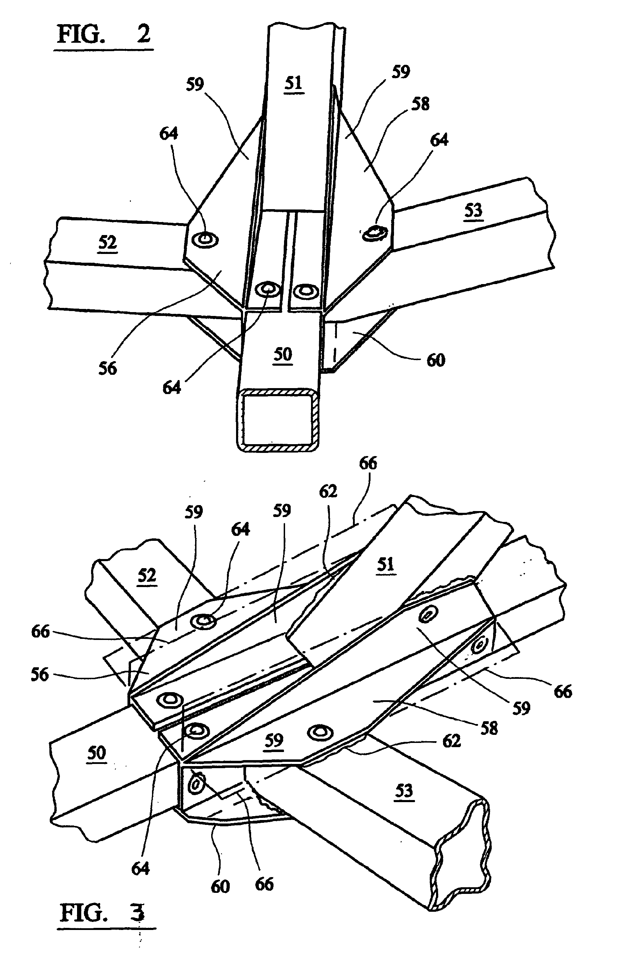

An arrangement where four hollow beams 50, 51, 52 and 53 are interconnected by means of a pair of cruciform members 56 and 58 is shown in Figures 2 and 3. In this embodiment, beams 51 and 53 are not at right angles to beam 50 as are beams 2, 4 and 6 to each other in the first embodiment.

As in the first embodiment, a reinforcing substantially planar plate 60 is used. The same adhesives as proposed for the first embodiment may be used and this is shown exuding at 62. Pop (RTM) rivets 64 are used in the same way as in the first embodiment. In order to tidy the connection and reduce the bulk and mass of the connection, triangular portions 66 bounded by broken lines, are cut away from the arms 59 of the regular cruciform members 56 and 58 which are cut from lengths of aluminium extrusions.

It will be noted that beam 51 is located at an acute angle to beam 50. This is simply arranged by cutting the end of beam 51 at an angle, and bonding and riveting the beam in place as in the Figure 1 embodiment.

Beam 53, however, is neither parallel to beam 52; nor perpendicular to either beam 50 or beam 51. To locate this beam accurately, both arm 59 of cruciform member 58 and plate 60 are deformed prior to assembly. If production volumes permit, cruciform member 58 may be extruded through an alternative die so that arm 59 is extruded at the correct angle, and does not require a secondary deformation operation. This approach delivers a stronger joint at the expense of making additional tooling, and carrying more stock. The cost of additional tooling is quite modest - £700 to £1000 per die at 2003 prices, for a die made in Britain. Similarly in the Figure 1 example, each of the arms 10 has almost the same width as the beams 2, 4, 6; therefore when two cruciform members 56 and 58 are juxtaposed on a single beam 50, as in Figures 2 and 3, the adjacent arms (10 in Figure 1) must be cut back to around half of their original width, so that they can both locate on one face of beam 50. Alternatively, to save repeated cutting operations, an alternative cruciform extrusion may be used for joints as shown in Figures 2 and 3.

Although square and rectangular beams are shown in the figures, the connection and connecting method of the invention may be adapted to other cross-sections of beams, particularly sections such as trapezia or so-called "top hat" sections, where substantial planar surfaces are available for bonding. Should the beams feature substantially indented corners or additional faces, the cruciform member would have to be a more complex extrusion, possibly featuring a central internal void, to ensure that the bonded areas maintained sufficient contact area with the surrounding beams. Such extrusions would be more costly than the simple extrusions illustrated, but could be required if the vehicle design requires corresponding beam forms.

The pop (RTM) rivets may be blind rivets, so that the water tightness of at least some of the beam sections may be retained. If required, finishing techniques such as powder coating or spray paint curing may be combined with the adhesive curing process; but allowance must be made in this case for the adhesive "gassing off" as it cures.

Whereas bonding is preferably by means of an adhesive, it is possible, depending on the metal of the beams and cruciform member (s), that some form of cold soldering may be used. Although the connection and connecting method of the invention have been described with particular reference to aluminium beams and extruded cruciforms, the connection and method could easily be applied to beams and thus frames of plastic and/or composite materials.

Where the beam connection is rectilinear as in Figure 1, the area between bonded surfaces is preferably substantially square, that is, the extent of the arm of the cruciform member is approximately the same as the width of the beam to be connected. In one example, the beam (e.g. in Figure 1, beam 2) to be connected to the main beam (e.g. in Figure 1, beam 6), is 40mm square in cross-section whilst the arm (e.g. in Figure 1, arm 10) extends 38mm up beam 2 in its elongate direction.

## Claims

1. A beam connection in a vehicle comprising at least one cruciform member (56, 58), the or each member having four extending planar portions (59), each portion providing a bonding area, **characterised in that** the or each member is at least partly bonded between at least three beams (50, 51, 52, 53) of the connection, the beams being interconnected by the bonding areas which extend in at least two different planes.

2. A connection as claimed in claim 1 wherein the bonding is by means of an adhesive (62).

3. A connection as claimed in claim 1 or 2 wherein a pair of cruciform members is fixed either side of one of the beams to secure beams extending outwardly from the one beam.

4. A connection as claimed in any one of claims 1 to 3 wherein a plate (60) is bonded to at least two sides of beams opposite arms of the cruciform member(s).

5. A connection as claimed in any one of claims 1 to 4 where the beams, cruciform member(s), and plate(s) where present are made of aluminium or aluminium alloy.

6. A connection as claimed in any of the preceding claims wherein the bonding area between the beam and the or each cruciform member is substantially square.

7. A method of connecting beams of a vehicle by providing at least one cruciform member (56, 58), the or each member having four extending planar portions (59), each portion providing a bonding area and offering to the member at least three beams with a bonding on each bonding area between the member and each of the three beams so as to form a connection between the beams, the beams being interconnected by the bonding areas which extend in at least two different planes.

8. A method as claimed in claim 7 wherein the bonding is an adhesive (62).

9. A method as claimed in claim 7 or 8 wherein rivets (64) are provided between the cruciform member and beams after bonding the cruciform member to the beams.

10. A method as claimed in claim 7 or 8 wherein the cruciform member is cut from an extruded elongate length of material of a cruciform cross section prior to bonding the member to the beams.

11. A method as claimed in any one of claims 7 to 10 wherein the beams, cruciform member(s) and plate(s) where present are made of aluminium or aluminium alloy.
